# EUROPÄISCHE PATENTSCHRIFT

(11) **EP 2 703 197 B1**
(45) Veröffentlichungstag und Bekanntmachung des Hinweises auf die Patenterteilung: **21.02.2018**
(21) Anmeldenummer: 13003057.0
(22) Anmeldetag: 14.06.2013
(51) Int. Cl.: B60G 17/052, B60G 17/016

(54) **Niveauregulierungsvorrichtung an einem Fahrzeug sowie Verfahren zur Steuerung derselben**
Height regulating device on a vehicle and method for controlling the same
Dispositif de régulation de niveau sur un véhicule et procédé de commande de celui-ci

(30) Priorität: 31.08.2012 DE 102012017274
(43) Veröffentlichungstag der Anmeldung: 05.03.2014
(73) Patentinhaber: WABCO GmbH, 30453 Hannover (DE)
(72) Erfinder: Stender, Axel, 31787 Hameln (DE)

(56) Entgegenhaltungen:
- DE-A1- 4 012 078
- DE-A1- 19 539 887
- DE-C2- 4 003 766
- GB-A- 2 177 475
- GB-A- 2 220 176
- GB-A- 2 230 358
- US-A- 5 466 007

## Beschreibung

Die Erfindung betrifft eine Niveauregulierungsvorrichtung an einem Fahrzeug, eine diesbezügliche Steuer- und Auswerteeinrichtung sowie ein Verfahren zur Steuerung derselben gemäß dem jeweiligen Oberbegriff der unabhängigen Patentansprüche.

Elektronisch geregelte Luftfederungen zur Niveauregulierung werden seit längerem in Nutzfahrzeugen wie Lastkraftwagen, Busse oder Anhängefahrzeugen sowie in Personenfahrzeugen eingesetzt. Eine elektronische Luftfederungsanlage besteht im Wesentlichen aus mehreren verstellbaren Luftfederelementen, die beispielsweise als Tragbälge ausgebildet sind, einer elektronischen Regelungs- und Auswerteeinrichtung, die in ein Datenbussystem eingebunden sein kann, einer Wegmesseinrichtung zur Erfassung des Abstandes des Fahrzeugsaufbaus gegenüber einer Fahrzeugachse, einem Ventilkreis mit Steuerungsventilen zum Befüllen oder Entleeren der Luftfederelemente und einem Bedienelement für einen jeweiligen Nutzer. Ein solches Bedienelement ermöglicht bei Nutzfahrzeugen eine Niveauregelung desselben zum Beladen bzw. Entladen, eine Anfahrhilferegelung sowie eine Traktionssteuerung. Insbesondere bei Anhängefahrzeugen kann eine gleich bleibende Aufbauhöhe und ein verbesserter Reifenfreilauf bei jeder Beladung erreicht werden.

Eine solche Niveauregulierungsvorrichtung erlaubt in der Regel eine Auswahl unter mehreren Fahrniveaus, also unterschiedlicher Abstandswerte des Fahrzeugaufbaus zu einer oder mehreren Fahrzeugachsen. Neben einem durch den Fahrzeughersteller festlegbaren Normalniveau für den Fahrbetrieb können weitere Niveaus, beispielsweise zur Höhenanpassung eines Lastzugs, zur Stabilitätsverbesserung bei hohen Geschwindigkeiten oder zur Kraftstoffersparnis wählbar sein.

Mittels einer situationsgerechten Befüllung der Luftfederelemente der Niveauregulierungsvorrichtung erfolgt im Fahrbetrieb eine automatische Nachregelung des aktuellen Istniveaus auf ein vorbestimmtes Sollniveau. Hierzu wird während der Fahrt permanent das aktuell ermittelte Istniveau des Fahrzeugs, also der aktuelle Abstand des Fahrzeugaufbaus von einer Fahrzeugachse, mit dem vorgegebenen Sollniveau verglichen. Überschreitet das Istniveau bei der Fahrt eine vorbestimmte Abweichung bzw. Toleranzschwelle über dem Sollniveau in positiver oder negativer Richtung und befindet sich das Istniveau somit aktuell außerhalb eines Toleranzbereiches der Niveaueinstellung, so gleicht eine Steuereinheit der Niveauregulierungsvorrichtung das Istniveau dem vorgegebenen Sollniveau durch ein Ansteuern der Ventile des Ventilkreises mit einem entsprechenden Belüften oder Entlüften eines oder mehrerer der genannten Luftfederelemente wieder an. Bei einer Änderung des Sollniveauwerts erfolgt ebenfalls eine entsprechende Ansteuerung des Ventilkreises, wobei eine Einschwingzeit des Systems zu berücksichtigen ist.

Beim Fahrtantritt eines derartig ausgestatteten Fahrzeugs erfolgt in der Regel zunächst eine automatische Ausregelung des Fahrniveaus gemäß einem abgespeicherten Sollniveauwertes. Während der Fahrt entstehen durch Fahrbahnunebenheiten, Kurvenfahrten, Bremsvorgänge, Beschleunigungsvorgänge und dergleichen Radlastwechsel, die durch das Federungsverhalten der Tragbälge ausgeglichen werden. Bei kurzzeitigen Abweichungen des Istniveaus vom Sollniveau des Fahrzeugs ist eine Balgbelüftung bzw. Balgentlüftung und damit eine Änderung des aktuellen Istniveaus nicht erwünscht, denn hierdurch würde ein undefiniertes Verändern der Federungseigenschaften des Fahrzeugs während solcher Fahrereignisse erfolgen. Außerdem würde durch ständige Regelungsvorgänge während der Fahrt unnötig viel Druckluft verbraucht werden. Daher wird im Fahrbetrieb üblicherweise eine Regelverzögerung genutzt, wonach bei einer Überschreitung des Istniveaus gegenüber dem Sollniveau eine Zurückregelung auf das Sollniveau erst nach Ablauf eines vorbestimmten Zeitraumes beginnt.

GB 2 177 475 A offenbart eine Luftfederungseinrichtung mit einem Luftfederbalg, wobei sich innerhalb des Luftfederbalgs eine Messeinrichtung zur Längenmessung befindet.

DE 40 12 078 A1 offenbart eine Niveauregeleinrichtung, die eine veränderbare Einschaltverzögerung aufweist, je nach einer von einem Weggeber sensierten Fahrbahnbeschaffenheit oder nach der Fahrgeschwindigkeit. Die Einschaltverzögerung ist bestimmt für Lastkraftwagen und Busse.

US 5,466,007, die den Oberbegriff des Anspruchs 1 zeigt, offenbart eine Luftfederungsanlage für Fahrzeuge, wobei zwei verschiedene Modi zur Regelung der Luftfederungsanlage offenbart werden.

Aus der DE 40 03 766 C2 ist eine Einrichtung zur Niveauregulierung an einem luftgefederten Fahrzeug bekannt, bei der die zeitliche Veränderung des Abstandes zwischen einem Fahrzeugaufbau und einer Fahrzeugachse ermittelt wird. Das Ansprechen der Niveauregelung wird innerhalb eines wählbaren oder konstant vorgegebenen Zeitintervalls unterdrückt, wenn der ermittelte Gradient einen vorgegebenen Gradientengrenzwert überschreitet. Dadurch wird eine Regelverzögerung erzeugt, um ein Ansprechen der Niveaureglung bei vorübergehenden dynamischen Einfederungen im Fahrbetrieb, wie sie durch Kurvenfahrten, Bodenwellen und Beschleunigungsvorgänge hervorgerufen werden, zu vermeiden. Die Zeitspanne ist so gewählt, dass die meisten im normalen Fahrbetrieb nicht zu regelnden Niveauänderungen erfasst sind. Allerdings führt eine Regelverzögerung bei einer undefinierten Änderung des Fahrzeugniveaus, beispielsweise durch eine Leckage im Ventilkreis, zu einer dann möglicherweise unerwünscht langsamen Nachreglung. Betriebsstörungen oder Fehlfunktionen können somit zu einem unkomfortablen oder ineffizienten Fahrverhalten sowie im Extremfall zu kritischen Situationen führen.

Vor diesem Hintergrund liegt der Erfindung die Aufgabe zugrunde, eine Niveauregulierungsvorrichtung an einem Fahrzeug, eine diesbezügliche Steuer-und Auswerteeinrichtung sowie ein Verfahren zur Steuerung dieser Niveauregulierungsvorrichtung anzugeben, mittels denen im Fahrbetrieb die Fahrsicherheit und der Fahrkomfort verbesserbar sind.

Die Lösung dieser Aufgabe ergibt sich aus den Merkmalen der unabhängigen Patentansprüche, während vorteilhafte Ausgestaltungen und Weiterbildungen der Erfindung den Unteransprüchen entnehmbar sind.

Der Erfindung liegt die Erkenntnis zugrunde, dass bei einer elektronisch geregelten Luftfederungsanlage an einem Fahrzeug durch Nutzen eines zusätzlichen, zweiten Toleranzbereiches für große Abweichungen zwischen einem Istniveau und einem Sollniveau des Fahrzeugs im Falle eines Verlassens dieses Toleranzbereiches eine quasi verzögerungsfreie Nachreglung erfolgen kann, um kritischen Anhebungen oder Absenkungen eines Fahrzeugaufbaus gegenüber einer Fahrzeugachse möglichst schnell entgegenzuwirken. Die Nachregelung erfolgt dabei so, dass das überhöhte Istniveau des Fahrzeugs auf das vorbestimmte Sollniveau zurückgeregelt wird. Innerhalb des zusätzlichen Toleranzbereiches kann, im Falle einer Nachregelung aufgrund des Verlassens eines ohnehin in einem solchen System implementierten kleineren Toleranzbereiches, die Nachregelung mit einer größeren zeitlichen Verzögerung erfolgen. Nicht zu regulierende, aufgrund normaler Fahrsituationen vorübergehend auftretende Anhebungen
oder Absenkungen des Fahrzeugsaufbaus gegenüber einer Fahrzeugachse außerhalb der von ihrem Wert kleineren Toleranzschwelle lassen sich dadurch wegfiltern, während im Falle eines andauernden Verlassens des ersten Toleranzbereiches eine normale Zurückregelung des Fahrzeugniveaus auf das Sollniveau erfolgen kann.

Demnach geht die Erfindung zur Lösung der verfahrensbezogenen Aufgabe aus von einem Verfahren zur Steuerung einer Niveauregulierungsvorrichtung an einem Fahrzeug, beispielsweise einer elektronisch geregelten Luftfederungsanlage an einem Anhängefahrzeug, zum Einstellen eines durch den Abstand zwischen einem federnd abgestützten Fahrzeugaufbau und einer Fahrzeugachse definierten Fahrniveaus im Fahrbetrieb, bei dem fortlaufend ein Istniveau mit einem vorgegebenen Sollniveau verglichen wird, bei dem das Istniveau unterhalb einer ersten Sollniveau-Toleranzschwelle nicht auf das Sollniveau zurückgeregelt wird, und bei dem bei einem Überschreiten der ersten Sollniveau-Toleranzschwelle durch das Istniveau dieses nach Ablauf einer Regelverzögerung mit der Länge eines ersten Zeitintervalls auf das Sollniveau zurückgeregelt wird.

Zur Lösung der Aufgabe sieht die Erfindung vor, dass zusätzlich zu der ersten Sollniveau-Toleranzschwelle und einem ersten Zeitintervall eine zweite Sollniveau-Toleranzschwelle und ein der zweiten Sollniveau-Toleranzschwelle zugeordnetes zweites Zeitintervall vorgegeben sind, wobei der Wert der zweiten Sollniveau-Toleranzschwelle größer ist als der Wert der ersten Sollniveau-Toleranzschwelle und bei dem die Dauer des zweiten Zeitintervalls kleiner ist als die Dauer des ersten Zeitintervalls, so dass im Ergebnis das Istniveau bei einem Überschreiten der zweiten Sollniveau-Toleranzschwelle mit einer kürzeren Regelverzögerung auf das Sollniveau zurückgeregelt wird als bei einem Überschreiten der ersten Sollniveau-Toleranzschwelle.

Unter einem Fahrniveau wird ein sich in einem Fahrbetrieb bei üblichen Fahrgeschwindigkeiten einrichtender Abstand zwischen einem Fahrzeugaufbau und einer Fahrzeugachse oder einer damit vergleichbaren Weggröße zweier sich relativ zueinander bewegender Elemente verstanden. Unter einem Sollniveau wird ein Abstandssollwert in einem Fahrbetrieb zwischen einem Fahrzeugaufbau und einer Fahrzeugachse oder einer damit vergleichbaren Weggröße zweier sich relativ zueinander bewegender Elemente definiert. Unter einem Istniveau wird ein Abstandsistwert in einem Fahrbetrieb zwischen einem Fahrzeugaufbau und einer Fahrzeugachse oder einer damit vergleichbaren Weggröße zweier sich relativ zueinander bewegender Elemente verstanden.

Das Verfahren gemäß der Erfindung ermöglicht ein schnelles Reagieren einer elektronisch geregelten Luftfederung, sofern im Fahrbetrieb ein aktuelles Istniveau zwischen einem Fahrzeugaufbau und einer Fahrzeugachse durch eine Störung wesentlich von einem vorab eingestellten Sollniveau abweicht.

Demnach wird zusätzlich zu einem bisherigen ersten Toleranzbereich mit einer ersten Toleranzschwelle über bzw. unter dem Sollniveau eine zweite Toleranzschwelle genutzt. Im Wertebereich zwischen dem Sollniveau und der ersten Toleranzschwelle finden die üblichen ausgleichenden Federbewegungen statt, mit denen die Luftfederung ihre Funktion erfüllt und auf die die Regelungsfunktionen gemäß der Erfindung nicht ansprechen.

Befindet sich das Istniveau nach einer Störung oberhalb des Wertes der ersten Toleranzschwelle, jedoch noch unterhalb der zweiten Toleranzschwelle, so erfolgt wie bei bisher bekannten Niveauregulierungsverfahren die Zurückregelung des Fahrzeugniveaus auf das Sollniveau mit einer relativ langen zeitlichen Verzögerung, die im Fahrbetrieb auftretende temporäre und nicht zu regelnden Einfederungen signifikanter Größe, wie beispielsweise bei langen Kurvenfahrten, berücksichtigt.

Befindet sich das Istniveau jedoch oberhalb der zweiten Toleranzschwelle, dann erfolgt gemäß der Erfindung die Zurückregelung des Fahrzeugistniveaus nach einer zeitlich nur kurzen Regelverzögerung. Dadurch kann das Regelungssystem bei großen irregulären Niveauabweichungen zwischen dem Istniveau und dem Sollniveau während der Fahrt nahezu unmittelbar eingreifen und somit mögliche kritische Fahrsituationen aufgrund von vergleichsweise großen Absenkungen oder Anhebungen des Fahrzeugaufbaus gegenüber einer Radachse verhindern. Die Fahrsicherheit eines derartigen Fahrzeugs wird somit erhöht. Gleichzeitig werden nicht zu regulierende Niveauabweichungen vom Sollniveau beim Fahrzeugbetrieb sozusagen weggefiltert und damit ein hoher Fahrkomfort gewährleistet sowie ein unnötiger Luft- bzw. Energieverbrauch der Luftfederungsanlage vermieden.

Bei einer Ausführungsform der Erfindung kann vorgesehen sein, dass die erste Sollniveau-Toleranzschwelle einen Wert aufweist, der um höchstens ±10 mm von dem Wert des Sollniveaus abweicht, und dass das zugehörige erste rückregelungslose Zeitintervall höchstens 60 Sekunden beträgt.

Außerdem kann vorgesehen sein, dass die zweite Sollniveau-Toleranzschwelle einen Wert aufweist, der um höchstens ±20 mm von dem Wert des Sollniveaus abweicht, und dass das zugehörige zweite rückregelungslose Zeitintervall höchstens 1 Sekunde beträgt.

Grundsätzlich sind die Werte der genannten Toleranzschwellen und die Zeiträume zur Regelverzögerung beliebig wählbar. Es hat sich jedoch gezeigt, dass eine erste Toleranzschwelle mit ±10 mm Abweichung gegenüber dem Sollniveau bzw. dem Sollabstand zwischen dem Fahrzeugaufbau und einer Radachse die meisten nicht zu regelnden Niveauänderungen im Fahrbetrieb erfasst. Bei erheblichen Störungen, beispielsweise verursacht durch ein Leck im Ventilkreislauf oder den Leitungen der Niveauregulierungsvorrichtung, hat sich eine zweite Toleranzschwelle mit ±20 mm Abweichung gegenüber dem Sollniveau als zweckmäßig herausgestellt, um zuverlässig eine betreffende schwerwiegende Störung zu erkennen und dennoch einen ausreichenden Abstand zu regulären fahrbetriebsbedingten Niveauänderungen beizubehalten. Die Zurückregelung des Istniveaus auf das Sollniveau des Fahrzeugs kann im Störungsfall bereits nach einer Regelverzögerung von 1 Sekunde einsetzen, also vorteilhaft unmittelbar nach dem Erkennen der Störung stattfinden.

Außerdem kann vorgesehen sein, dass mehrere Soll-Niveaus in einer Steuerungs- und Auswerteeinrichtung der Niveauregulierungsvorrichtung voreingestellt sind, wobei die zweite Sollniveau-Toleranzschwelle und/oder das zugehörige zweite Zeitintervall dem jeweiligen Sollniveau angepasst sind. Dadurch kann bei einem ersten Sollniveau, welches gegenüber einem üblicherweise verwendeten normalen Sollniveau abgesenkt oder angehoben ist und das möglicherweise aus Sicherheits- oder Zulässigkeitsgründen nur kleinere Toleranzen bei der Einfederung bzw. Ausfederung des Fahrzeugaufbaus gegenüber der zumindest einen Radachse erlaubt, früher auf eine Störung erkannt werden und eine entsprechend schnellere Nachregelung erfolgen.

Zur Vereinfachung der Steuerung kann weiterhin kann vorgesehen sein, dass die zweite Sollniveau-Toleranzschwelle und das zugehörige zweite Zeitintervall erst bei Überschreiten einer vorgegebenen Fahrgeschwindigkeit aktiviert werden.

Um den Fahrzeugführer im Falle einer schnellen Nachregelung der Luftfederung zu informieren oder darauf vorzubereiten, kann eine Warneinrichtung vorgesehen sein die beim Überschreiten der zweiten Sollniveau-Toleranzschwelle aktiviert wird. Dies kann eine optische oder akustische Anzeige sein, die beispielsweise in ein Bedienelement oder ein Anzeigeinstrument integriert ist. Dadurch wird der Fahrzeugführer darüber in Kenntnis gesetzt, dass ein erhebliches Anheben oder Absenken des Fahrzeugaufbaus stattgefunden hat bzw. gerade stattfindet, so dass dieser entsprechend sinnvoll reagieren kann.

Das Verfahren ist grundsätzlich bei allen Niveauregulierungsvorrichtungen mit einer Regelverzögerung und an allen damit ausgestatteten Fahrzeugen anwendbar. Dazu ist lediglich eine vorhandene Steuer- und Auswerteeinrichtung entsprechend zu modifizieren. Insbesondere kann bei Anhängefahrzeugen durch ein schnelles Reagieren der elektronisch geregelten Luftfederung im Falle eines Anhebens eines Aufbaus aufgrund einer erheblichen Abweichung des Istniveaus vom Sollniveau durch eine Störung die Gefahr von Kollisionen an höhenbegrenzten Unterführungen vermieden werden.

Zur Lösung der vorrichtungsbezogenen Aufgabe wird gemäß der Erfindung eine Niveauregulierungsvorrichtung mit einer Steuer- und Auswerteeinrichtung gemäß der Erfindung vorgeschlagen, die dazu eingerichtet ist, wenigstens zwei vorgegebene sowie unterschiedlich große Sollniveau-Toleranzbereiche zu unterscheiden, und weiter dazu eingerichtet ist, bei einer Abweichung des Istniveaus von dem Sollniveau innerhalb des ersten Sollniveau-Toleranzbereiches keine Rückregelung auf das Sollniveau zu veranlassen, bei einem Überschreiten des ersten Sollniveau-Toleranzbereiches durch das Istniveau innerhalb des zweiten Sollniveau-Toleranzbereiches eine Zurückregelung des Istniveaus auf das Sollniveau nach Ablauf einer ersten Regelverzögerung zu veranlassen, und bei einem Überschreiten des zweiten Sollniveau-Toleranzbereiches durch das Istniveau eine Zurückregelung des Istniveaus auf das Sollniveau nach Ablauf einer zweiten Regelverzögerung zu veranlassen, wobei die Niveauregulierungsvorrichtung derart eingerichtet ist, dass das Zeitintervall der zweiten Regelverzögerung kürzer ist als das Zeitintervall der erste Regelverzögerung.

Schließlich ist eine Steuer- und Auswerteeinrichtung zur Durchführung des Verfahrens gemäß der Erfindung dadurch gekennzeichnet, dass diese mit einem Ventilkreis mit Ventilen und Leitungen zur Be- und Entlüftung von Luftfederelementen, mit einer Wegmesseinrichtung zur Erfassung des Abstandes zwischen einer Fahrzeugachse und einem Fahrzeugaufbau, mit einer Warneinrichtung und mit einem Bedienelement für einen jeweiligen Nutzer der Niveauregulierungsvorrichtung elektrisch verbunden ist. Außerdem ist diese Steuer-und Auswerteeinrichtung dazu eingerichtet, wenigstens zwei vorgegebene sowie unterschiedlich große Sollniveau-Toleranzbereiche zu unterscheiden, und weiter dazu eingerichtet, bei einer Abweichung des Istniveaus von dem Soliniveau innerhalb des ersten Sollniveau-Toleranzbereiches keine Rückregelung auf das Sollniveau zu veranlassen, bei einem Überschreiten des ersten Sollniveau-Toleranzbereiches durch das Istniveau innerhalb des zweiten Sollniveau-Toleranzbereiches eine Zurückregelung des Istniveaus auf das Sollniveau nach Ablauf einer ersten Regelverzögerung zu veranlassen, und bei einem Überschreiten des zweiten Sollniveau-Toleranzbereiches durch das Istniveau eine Zurückregelung des Istniveaus auf das Sollniveau nach Ablauf einer zweiten Regelverzögerung zu veranlassen, wobei die Niveauregulierungsvorrichtung derart eingerichtet ist, dass das Zeitintervall der zweiten Regelverzögerung kürzer ist als das Zeitintervall der erste Regelverzögerung.

Zur weiteren Verdeutlichung der Erfindung ist der Beschreibung eine Zeichnung eines Ausführungsbeispiels beigefügt. In dieser zeigt
Fig. 1 eine elektronisch geregelte Niveauregulierungsvorrichtung eines Fahrzeugs in einer stark schematisierten Darstellung, und
Fig. 2 ein Diagramm zur Erläuterung des Verfahrens gemäß der Erfindung.

Demnach wird das Verfahren gemäß der Erfindung zum Betrieb einer Niveauregulierungsvorrichtung an einem Fahrzeug mit einer elektronisch geregelten Luftfederungsanlage durchgeführt.

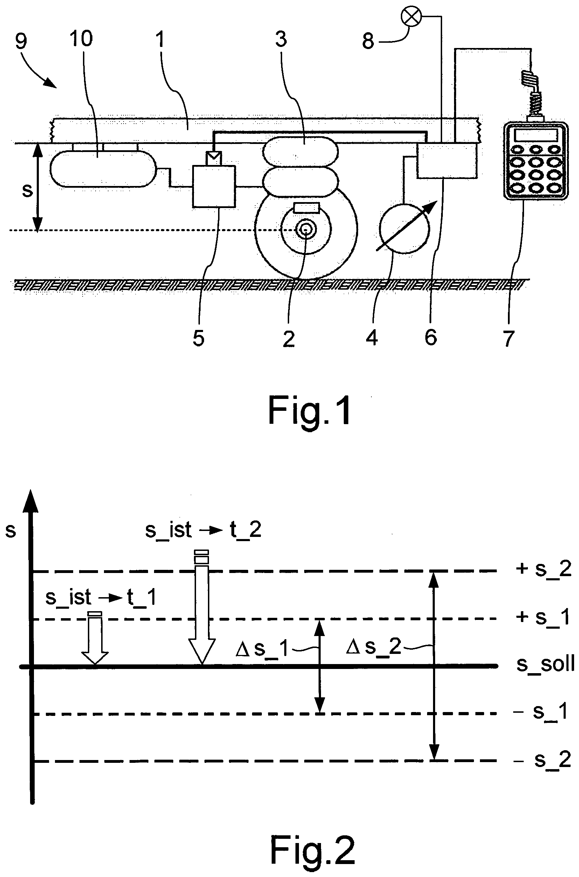

Eine in Fig. 1 vereinfacht dargestellte Niveauregulierungsvorrichtung 9 weist mehrere als Tragbälge ausgebildete verstellbare Luftfederelemente 3 für eine federnde Abstützung eines Fahrzeugaufbaus 1 gegenüber einer oder mehreren Fahrzeugachsen 2 auf, sowie eine sensorgestützte Wegmesseinrichtung 4 zur Erfassung von Weggrößen für eine Niveaubestimmung, ein Ventilkreis 5 mit nicht dargestellten Ventilen und Leitungen zur Be- und Entlüftung der Luftfederelemente 3, eine elektronische Steuer- und Auswerteeinrichtung 6 zur Auswertung der Weggrößen und Steuerung der Belüftung und Entlüftung der Luftfederelemente 3 zur Einstellung eines Fahrniveaus s im Sinne eines Abstandes zwischen dem Fahrzeugaufbau 1 und der Fahrzeugachse 2, ein Bedienelement 7 für einen jeweiligen Nutzer, sowie eine Warneinrichtung 8 in Form einer Warnlampe. Der Ventilkreis 5, die Wegmesseinrichtung 4, die Warneinrichtung 8 und das Bedienelement 7 sind mit der Steuer- und Auswerteeinrichtung 6 elektrisch verbunden. Der Ventilkreis 5 ist mit den Luftfederelementen 3 schaltbar pneumatisch verbunden und weist einen nicht näher bezeichneten Druckluftanschluss, der von einem Druckluftbehälter 10 mit Druckluft versorgbar ist.

Eine solche Niveauregulierungsvorrichtung 9 für ein Fahrzeug ist in Funktion und Aufbau weitgehend aus dem ECAS-System der Anmelderin bekannt. Daher wird nachfolgend zunächst ein Verfahren gemäß der Erfindung zur Steuerung eines solchen oder eines vergleichbaren elektronisch geregelten Luftfederungssystems beschrieben.

Fig. 2 dient zur Erläuterung des Verfahrens gemäß der Erfindung. Darin ist ein Fahrniveau s eines mit der Luftfederungsanlage ausgerüsteten Fahrzeugs bezogen auf ein Sollniveau s_soll dargestellt.

Das Fahrniveau s entspricht einem Abstandsnormalwert zwischen einer Fahrzeugachse 2 und einem Fahrzeugaufbau 1 des Fahrzeugs in einem Fahrbetrieb. Vor Fahrtantritt wird ein bestimmtes Sollniveau s_soll, also ein Abstandssollwert zwischen dem Fahrzeugaufbau 1 und der Fahrzeugachse 2, mittels des Bedienelements 7 eingestellt oder ein solcher Abstandssollwert ist bereits vom Fahrzeughersteller bei einer Parametrierung der Niveauregulierungsvorrichtung am Fahrzeug voreingestellt worden. Zu Beginn der Fahrt stellt sich das Fahrniveaus bei zunehmender Fahrzeuggeschwindigkeit im normalen Fahrbetrieb auf das Sollniveau s_soll oder in der Nähe des Soll-Niveaus s_soll ein.

Mittels der Wegsensorik 4 und der Steuer- und Auswerteeinrichtung 6 erfolgt während der Fahrt ein permanenter Vergleich der Werte des Sollniveaus s_soll zum tatsächlichen Fahrzeugniveau, dem Istniveau s_ist. Übliche Einfederungen der Luftfederung, die während des Fahrbetriebs durch streckentypische Kurvenfahrten, Bodenwellen, Unebenheiten usw. entstehen, werden durch die Tragbälge 3 ausgefedert. Diese temporären Niveauänderungsereignisse sollen nicht zu einer Rückregelung des Istniveaus s_ist auf den Wert des Soll-Niveaus s_soll führen. Um dies zu erreichen ist eine erste Sollniveau-Toleranzschwelle s_1 vorgesehen, die mit einer Regelverzögerung gemäß einem ersten Zeitintervall t_1 verbunden ist. Die ersten Sollniveau-Toleranzschwelle s_1 kann beispielsweise s_1 = ± 10 mm entfernt vom Sollniveaus liegen und das zweite Zeitintervall kann t_1 = 60 Sekunden betragen.

Außerdem ist eine zweite Sollniveau-Toleranzschwelle s_2 vorgesehen, die mit einer zweiten Regelverzögerung gemäß einem zweiten Zeitintervall t_2 verbunden ist. Die zweite Sollniveau-Toleranzschwelle s_2 kann beispielsweise s_2 = ±20 mm entfernt vom Sollniveaus liegen und das zweite Zeitintervall kann t_2 = 1 Sekunden betragen.

Durch die beiden Sollniveau-Toleranzschwellen s_1 und s_2 mit ihren positiven und negativen Werten ist ein erster Toleranzbereich Δs_1 sowie ein zweiter Toleranzbereich Δs_2 gebildet, in deren Mitte sich jeweils das Sollniveau s_soll befindet. Solange sich das Istniveau s_ist innerhalb des ersten Toleranzbereiches Δs_1 unterhalb der ersten Sollniveau-Toleranzschwelle s_1 befindet, erfolgt keine Zurückregelung auf das Sollniveau s_soll.

Befindet sich das Istniveau s_ist jedoch außerhalb der ersten Sollniveau-Toleranzschwelle s_1 bzw. außerhalb des entsprechenden ersten Toleranzbereiches Δs_1, jedoch noch unterhalb der zweiten Sollniveau-Toleranzschwelle s_2 bzw. noch innerhalb des entsprechenden zweiten Toleranzbereiches Δs_2, so erfolgt eine Zurückregelung des Istniveaus s_ist auf den Wert des Sollniveau s_Soll, und zwar nach Ablauf einer Regelverzögerung entsprechend des ersten Zeitintervalls t_1. Die Zurückregelung erfolgt demnach erst 60 Sekunden nach Feststellung des Überschreitens der ersten Sollniveau-Toleranzschwelle s_1 durch das Istniveau, mithin eine relativ spät einsetzende Zurückregelung. Dadurch wird sichergestellt, dass ein vorübergehendes Verlassen des ersten Toleranzbereiches Δs_1 durch eine relativ lange aber endliche Einfederungen, wie bei einer langen Kurvendurchfahrt, nicht unnötigerweise zu einer Nachregelung und zu einem Druckluftverbrauch führt. Erst wenn die Niveauveränderung des Fahrzeugs länger als 60 Sekunden über den Wert der ersten Sollniveau-Toleranzschwelle s_1 andauert, wird sie als eine permanente Störung oder dergleichen betrachtet und entsprechend auf den Wert des Sollniveaus s_soll zurückgeregelt.

Befindet sich der Wert des Istniveaus s_ist jedoch nach einer nicht näher definierten Störung außerhalb des zweiten Toleranzbereiches Δs_2, weicht also erheblich vom Sollniveau s_Soll ab, so erfolgt nach dem Verfahren der Erfindung eine Rückregelung des Ist-Niveaus s_ist auf das Sollniveau s_soll bereits nach einer Regelverzögerung entsprechend des zweiten Zeitintervalls t_2, also eine schnelle Zurückregelung nach 1 Sekunde. Dadurch wird sichergestellt, dass ein möglicherweise sicherheitsrelevantes Verlassen des zweiten Toleranzbereiches Δs_2 durch eine erhebliche Störung, wie etwa ein Druckverlust oder ein Druckanstieg der Tragbälge, beispielsweise in Folge einer internen Leckage des Ventilkreises 5, zu einem schnellen Zurückregeln des Istniveaus auf das Sollniveau führt. Dadurch können gegebenenfalls kritische Fahrsituationen in Folge eines Anhebens oder Absenkens des Fahrzeugaufbaus über ein zulässiges Maß hinaus vermieden werden.

Um dieses Verfahren durchführen zu können ist vorgesehen, dass die Steuer- und Auswerteeinrichtung 6 wie bereits erwähnt mit dem Ventilkreis 5, mit der Wegmesseinrichtung 4, mit der Warneinrichtung 8 und mit dem Bedienelement 7 des Fahrzeugs elektrisch verbunden ist. Außerdem ist diese Steuer-und Auswerteeinrichtung 6 dazu eingerichtet, wenigstens zwei vorgegebene sowie unterschiedlich große Sollniveau-Toleranzbereiche Δs_1, Δs_2 zu unterscheiden, und weiter dazu eingerichtet, bei einer Abweichung des Istniveaus s_ist von dem Sollniveau s_soll innerhalb des ersten Sollniveau-Toleranzbereiches Δs_1 keine Rückregelung auf das Sollniveau s_soll zu veranlassen, bei einem Überschreiten des ersten Sollniveau-Toleranzbereiches Δs_1 durch das Istniveau s_ist innerhalb des zweiten Sollniveau-Toleranzbereiches Δs_2 eine Zurückregelung des Istniveaus s_ist auf das Sollniveau s_soll nach Ablauf einer ersten Regelverzögerung zu veranlassen, und bei einem Überschreiten des zweiten Sollniveau-Toleranzbereiches Δs_2 durch das Istniveau s_ist eine Zurückregelung des Istniveaus s_ist auf das Sollniveau s_soll nach Ablauf einer zweiten Regelverzögerung zu veranlassen, wobei die Niveauregulierungsvorrichtung 9 derart eingerichtet ist, dass das Zeitintervall t_1 der zweiten Regelverzögerung kürzer ist als das Zeitintervall t_1 der erste Regelverzögerung.

## Patentansprüche

1. Verfahren zur Steuerung einer Niveauregulierungsvorrichtung (9) an einem Fahrzeug, beispielsweise einer elektronisch geregelten Luftfederungsanlage an einem Anhängefahrzeug, zum Einstellen eines durch den Abstand zwischen einem federnd abgestützten Fahrzeugaufbau (1) und einer Fahrzeugachse (2) definierten Fahrniveaus (s) im Fahrbetrieb, bei dem fortlaufend ein Istniveau (s_ist) mit einem vorgegebenen Sollniveau (s_soll) verglichen wird, bei dem das Istniveau (s_ist) unterhalb einer ersten Sollniveau-Toleranzschwelle (s_1) nicht auf das Sollniveau (s_soll) zurückgeregelt wird, und bei dem bei einem Überschreiten der ersten Sollniveau-Toleranzschwelle (s_1) durch das Istniveau (s_ist) dieses nach Ablauf einer Regelverzögerung mit der Länge eines ersten Zeitintervalls (t_1) auf das Sollniveau (s_soll) zurückgeregelt wird, **dadurch gekennzeichnet, dass** zusätzlich zu der ersten Sollniveau-Toleranzschwelle (s_1) und einem ersten Zeitintervall (t_1) eine zweite Sollniveau-Toleranzschwelle (s_2) und ein der zweiten Sollniveau-Toleranzschwelle (s_2) zugeordnetes zweites Zeitintervall (t_2) vorgegeben sind, wobei der Wert der zweiten Sollniveau-Toleranzschwelle (s_2) größer ist als der Wert der ersten Sollniveau-Toleranzschwelle (s_1) und bei dem die Dauer des zweiten Zeitintervalls (t_2) kleiner ist als die Dauer des ersten Zeitintervalls (t_1), so dass das Istniveau (s_ist) bei einem Überschreiten der zweiten Sollniveau-Toleranzschwelle (s_2) mit einer kürzeren Regelverzögerung auf das Sollniveau (s_soll) zurückgeregelt wird als bei einem Überschreiten der ersten Sollniveau-Toleranzschwelle (s_1).

2. Verfahren nach Anspruch 1, **dadurch gekennzeichnet, dass** die erste Sollniveau-Toleranzschwelle (s_1) einen Wert aufweist, der um höchstens ± 10 mm von dem Wert des Sollniveaus (s_soll) abweicht, und dass das zugehörige erste rückregelungslose Zeitintervall (t_1) höchstens 60 Sekunden beträgt.

3. Verfahren nach Anspruch 1, **dadurch gekennzeichnet, dass** die zweite Sollniveau-Toleranzschwelle (s_2) einen Wert aufweist, der um höchstens ±20 mm von dem Wert des Sollniveaus (s_soll) abweicht, und dass das zugehörige zweite rückregelungslose Zeitintervall (t_2) höchstens 1 Sekunde beträgt.

4. Verfahren einem der Ansprüche 1 bis 3, **dadurch gekennzeichnet, dass** mehrere Soll-Niveaus (s_soll) voreingestellt sind, wobei die zweite Sollniveau-Toleranzschwelle (s_2) und/oder das zugehörige zweite Zeitintervall (t_2) dem jeweiligen Sollniveau (s_soll) angepasst sind.

5. Verfahren nach einem der Ansprüche 1 bis 4, **dadurch gekennzeichnet, dass** die zweite Sollniveau-Toleranzschwelle (s_2) und das zugehörige zweite Zeitintervall (t_2) bei Überschreiten einer vorgegebenen Fahrgeschwindigkeit aktiviert werden.

6. Verfahren nach einem der Ansprüche 1 bis 5, **dadurch gekennzeichnet, dass** eine Warneinrichtung für den Fahrzeugführer beim Überschreiten der zweiten Sollniveau-Toleranzschwelle (s_2) aktiviert wird.

7. Steuer- und Auswerteeinrichtung (6) zur Durchführung des Verfahrens nach wenigstens einem der Verfahrensansprüche, wobei die Steuer- und Auswerteeinrichtung (6) mit einem Ventilkreis (5) mit Ventilen und Leitungen zur Be- und Entlüftung von Luftfederelementen (3), mit einer Wegmesseinrichtung (4) zur Erfassung des Abstandes zwischen einer Fahrzeugachse (2) und einem Fahrzeugaufbau (1), mit einer Warneinrichtung (8) und mit einem Bedienelement (7) für einen jeweiligen Nutzer der Niveauregulierungsvorrichtung (9) elektrisch verbunden ist, wobei diese Steuer- und Auswerteeinrichtung (6) dazu eingerichtet ist, wenigstens zwei vorgegebene sowie unterschiedlich große Sollniveau-Toleranzbereiche (Δs_1; Δs_2) zu unterscheiden, und weiter dazu eingerichtet ist, bei einer Abweichung des Istniveaus (s_ist) von dem Sollniveau (s_soll) innerhalb des ersten Sollniveau-Toleranzbereiches (Δs_1) keine Rückregelung auf das Sollniveau (s_soll) zu veranlassen, bei einem Überschreiten des ersten Sollniveau-Toleranzbereiches (Δs_1) durch das Istniveau (s_ist) innerhalb des zweiten Sollniveau-Toleranzbereiches (Δs_2) eine Zurückregelung des Istniveaus (s_ist) auf das Sollniveau (s_soll) nach Ablauf einer ersten Regelverzögerung zu veranlassen, und bei einem Überschreiten des zweiten Sollniveau-Toleranzbereiches (Δs_2) durch das Istniveau (s_ist) eine Zurückregelung des Istniveaus (s_ist) auf das Sollniveau (s_soll) nach Ablauf einer zweiten Regelverzögerung zu veranlassen, wobei die Niveauregulierungsvorrichtung (9) derart eingerichtet ist, dass das Zeitintervall (t_1) der zweiten Regelverzögerung kürzer ist als das Zeitintervall (t_2) der erste Regelverzögerung.

8. Niveauregulierungsvorrichtung (9) für ein Fahrzeug mit einer Steuer-und Auswerteeinrichtung nach Anspruch 7, **dadurch gekennzeichnet, dass** diese dazu eingerichtet ist, wenigstens zwei vorgegebene sowie unterschiedlich große Sollniveau-Toleranzbereiche (Δs_1; Δs_2) zu unterscheiden, und weiter dazu eingerichtet ist, bei einer Abweichung des Istniveaus (s_ist) von dem Sollniveau Toleranzbereiches (Δs_1) durch das Istniveau (s_ist) innerhalb des zweiten Sollniveau-Toleranzbereiches (Δs_2) eine Zurückregelung des Istniveaus (s_ist) auf das Sollniveau (s_soll) nach Ablauf einer ersten Regelverzögerung zu veranlassen, und bei einem Überschreiten des zweiten Sollniveau-Toleranzbereiches (Δs_2) durch das Istniveau (s_ist) eine Zurückregelung des Istniveaus (s_ist) auf das Sollniveau (s_soll) nach Ablauf einer zweiten Regelverzögerung zu veranlassen, wobei die Niveauregulierungsvorrichtung (9) derart eingerichtet ist, dass das Zeitintervall (t_1) der zweiten Regelverzögerung kürzer ist als das Zeitintervall (t_2) der erste Regelverzögerung.

## Claims

1. Method for controlling a ride level control device (9) on a vehicle, for example an electronically controlled air suspension system on a trailer vehicle, for adjusting, in the travel mode, a ride level(s) defined by the distance between a spring-supported vehicle body (1) and a vehicle axle (2), in which method an actual ride level (s_act) is continuously compared with a predefined set point ride level (s_setp), in which the actual ride level (s_act) below a first set point ride level tolerance threshold (s_1) is not revertively controlled to the set point ride level (s_setp) and in which when the first set point ride level tolerance threshold (s_1) is exceeded by the actual ride level (s_act) the latter is revertively controlled to the set point ride level (s_setp) after the expiry of a control delay with the length of a first time interval (t_1), **characterized in that** in addition to the first set point ride level tolerance threshold (s_1) and a first time interval (t_1) a second set point ride level tolerance threshold (s_2) and a second time interval (t_2) which is assigned to the second set point ride level tolerance threshold (s_2) are predefined, wherein the value of the second set point ride level tolerance threshold (s_2) is higher than the value of the first set point ride level tolerance threshold (s_1), and in which the duration of the second time interval (t_2) is shorter than the duration of the first time interval (t_1), with the result that the actual ride level (s_act) is revertively controlled to the set point ride level (s_setp) with a shorter control delay when the second set point ride level tolerance threshold (s_2) is exceeded than when the first set point ride level tolerance threshold (s_1) is exceeded.

2. Method according to Claim 1, **characterized in that** the first set point ride level tolerance threshold (s_1) has a value which deviates from the value of the set point ride level (s_setp) by a maximum ± 10 mm, and **in that** the associated first time interval (t_1) without revertive control is at maximum 60 seconds.

3. Method according to Claim 1, **characterized in that** the second set point ride level tolerance threshold (s_2) has a value which deviates from the value of the set point ride level (s_setp) by a maximum ± 20 mm, and **in that** the associated second time interval (t_2) without revertive control is at maximum 1 second.

4. Method according to one of Claims 1 to 3, **characterized in that** a plurality of set point ride levels (s_setp) are preset, wherein the second set point ride level tolerance threshold (s_2) and/or the associated second time interval (t_2) are adapted to the respective set point ride level (s_setp).

5. Method according to one of Claims 1 to 4, **characterized in that** the second set point ride level tolerance threshold (s_2) and the associated second time interval (t_2) are activated when a predefined velocity is exceeded.

6. Method according to one of Claims 1 to 5, **characterized in that** a warning device for the vehicle driver is activated when the second set point ride level tolerance threshold (s_2) is exceeded.

7. Control and evaluation device (6) for carrying out the method according to at least one of the method claims, wherein the control and evaluation device (6) is electrically connected to a valve circuit (5) with valves and lines for venting and aerating air spring elements (3), with a travel measuring device (4) for detecting the distance between a vehicle axle (2) and a vehicle body (1) with a warning device (8) and with an operator control element (7) for a respective user of the ride level control device (9), wherein this control and evaluation device (6) is configured to differentiate at least two predefined set point ride level tolerance ranges (Δs_1; Δs_2) which are different sizes, and is also configured not to bring about revertive control to the set point ride level (s_setp) when the actual ride level (s_act) deviates from the set point ride level (s_setp) within the first set point ride level tolerance range (Δs_1), to bring about revertive control of the actual ride level (s_act) to the set point ride level (s_setp) after expiry of a first control delay when the first set point ride level tolerance range (Δs_1) is exceeded by the actual ride level (s_act) within the second set point ride level tolerance range (Δs_2), and to bring about revertive control of the actual ride level (s_act) to the set point ride level (s_setp) after the expiry of a second control delay when the second set point ride level tolerance range (Δs_2) is exceeded by the actual ride level (s_act), wherein the ride level control device (9) is configured in such a way that the time interval (t_1) of the second control delay is shorter than the time interval (t_2) of the first control delay.

8. Ride level control device (9) for a vehicle having a control and evaluation device according to Claim 7, **characterized in that** the latter is configured to differentiate at least two predefined set point ride level tolerance ranges (Δs_1; Δs_2) which have different sizes, and is also configured to bring about revertive control of the actual ride level (s_act) to the set point ride level (s_setp) after the expiry of a first control delay when the actual ride level (s_act) deviates from the set point ride level tolerance range (Δs_1) by the actual ride level (s_act) within the second set point ride level tolerance range (Δs_2), and to bring about revertive control of the actual ride level (s_act) to the set point ride level (s_setp) after the expiry of the second control delay when the second set point ride level tolerance range (Δs_2) is exceeded by the actual ride level (s_act), wherein the ride level control device (9) is configured in such a way that the time interval (t_1) of the second control delay is shorter than the time interval (t_2) of the first control delay.

## Revendications

1. Procédé de commande d'un dispositif de régulation de niveau (9) sur un véhicule, comme par exemple un système de suspension pneumatique régulé de manière électronique sur un véhicule tracté, destiné à régler un niveau de conduite (s) défini par la distance entre un châssis de véhicule (1) supporté par ressort et un essieu de véhicule (2) pendant le déplacement, dans lequel un niveau réel (s_ist) est comparé en continu à un niveau théorique (s_soll) prédéterminé, dans lequel, en dessous d'un premier seuil de tolérance de niveau théorique (s_1), le niveau réel (s_ist) n'est pas rétro-régulé au niveau théorique (s_soll), et dans lequel, lorsque le premier seuil de tolérance de niveau théorique (s_1) est dépassé par le niveau réel (s_ist), ce dernier est rétro-régulé au niveau théorique (s_soll) après expiration d'un temps de retard de régulation ayant la longueur d'un premier intervalle de temps (t_1), **caractérisé en ce que**, en plus du premier seuil de tolérance de niveau théorique (s_1) et d'un premier intervalle de temps (t_1), un deuxième seuil de tolérance de niveau théorique (s_2) et un deuxième intervalle de temps (t_2) associé au deuxième seuil de tolérance de niveau théorique (s_2) sont prédéfinis, dans lequel la valeur du deuxième seuil de tolérance de niveau théorique (s_2) est supérieure à la valeur du premier seuil de tolérance de niveau théorique (s_1) et dans lequel la durée du deuxième intervalle de temps (t_2) est inférieure à la durée du premier intervalle de temps (t_1), de sorte que le niveau réel (s_ist) est rétro-régulé au niveau théorique (s_soll) lorsque le deuxième seuil de tolérance de niveau théorique (s_2) est dépassé, avec un temps de retard de régulation inférieur au cas où le premier seuil de tolérance de niveau théorique (s_1) est dépassé.

2. Procédé selon la revendication 1, **caractérisé en ce que** le premier seuil de tolérance de niveau théorique (s_1) présente une valeur qui s'écarte d'au plus ±10 mm de la valeur du niveau théorique (s_soll) et **en ce que** le premier intervalle de temps sans rétro-régulation (t_1) correspondant est au plus de 60 secondes.

3. Procédé selon la revendication 1, **caractérisé en ce que** le deuxième seuil de tolérance de niveau théorique (s_2) présente une valeur qui s'écarte d'au plus ±20 mm de la valeur du niveau théorique (s_soll) et **en ce que** le deuxième intervalle de temps sans rétro-régulation (t_2) correspondant est au plus de 1 seconde.

4. Procédé selon l'une quelconque des revendications 1 à 3, **caractérisé en ce que** plusieurs niveaux théoriques (s_soll) sont préréglés, dans lequel le deuxième seuil de tolérance de niveau théorique (s_2) et/ou le deuxième intervalle (t_2) correspondant sont adaptés au niveau théorique (s_soll) correspondant.

5. Procédé selon l'une quelconque des revendications 1 à 4, **caractérisé en ce que** le deuxième seuil de tolérance de niveau théorique (s_2) et le deuxième intervalle (t_2) correspondant sont activés lors du dépassement d'une vitesse de déplacement prédéterminée.

6. Procédé selon l'une quelconque des revendications 1 à 5, **caractérisé en ce qu'**un dispositif d'alarme est activé pour le conducteur du véhicule lorsque le deuxième seuil de tolérance de niveau théorique (s_2) est dépassé.

7. Dispositif de commande et d'évaluation (6) destiné à mettre en oeuvre le procédé selon au moins l'une des revendications de procédé, dans lequel le dispositif de commande et d'évaluation (6) est relié électriquement à un circuit de vannes (5) comportant des vannes et des conduits destinés à l'entrée et à la sortie d'air dans et hors d'éléments de suspension pneumatique (3), à un dispositif de mesure de position (4) destiné à détecter la distance entre un essieu de véhicule (2) et un châssis de véhicule (1), à un dispositif d'alarme (8) et à un élément de commande (7) destiné à un utilisateur respectif du dispositif de régulation de niveau (9), dans lequel ledit dispositif de commande et d'évaluation (6) est conçu pour distinguer au moins deux plages de tolérance de niveau théorique prédéterminées et de tailles différentes (Δs_1 ; Δs_2), et est en outre conçu, lors d'un écart du niveau réel (s_ist) par rapport au niveau théorique (s_soll) se situant à l'intérieur de la première plage de tolérance de niveau théorique (Δs_1), pour ne pas provoquer de rétro-régulation au niveau théorique (s_soll), lors d'un dépassement de la première plage de tolérance de niveau théorique (Δs_1) par le niveau réel (s_ist) à l'intérieur de la deuxième plage de tolérance de niveau théorique (Δs_2), pour provoquer une rétro-régulation du niveau réel (s_ist) au niveau théorique (s_soll) après expiration d'un premier temps de retard de régulation et, lors d'un dépassement de la deuxième plage de tolérance de niveau théorique (Δs_2) par le niveau réel (s_ist), pour provoquer une rétro-régulation du niveau réel (s_ist) au niveau théorique (s_soll) après expiration d'un deuxième temps de retard de régulation, dans lequel le dispositif de régulation de niveau (9) est conçu de telle sorte que l'intervalle de temps (t_1) du deuxième temps de retard de régulation soit inférieur à l'intervalle de temps (t_2) du premier temps de retard de régulation.

8. Dispositif de régulation de niveau (9) destiné à un véhicule, comportant un dispositif de commande et d'évaluation selon la revendication 7, **caractérisé en ce qu'**il est conçu pour distinguer au moins deux plages de tolérance de niveau théorique prédéterminées et de taille différente (Δs_1 ; Δs_2), et est en outre conçu, lors d'un écart entre le niveau réel (s_ist) et la plage de tolérance de niveau théorique (Δs_1) par le niveau réel (s_ist), pour provoquer une rétro-régulation du niveau réel (s_ist) au niveau théorique (s_soll) à l'intérieur de la deuxième plage de tolérance de niveau théorique (Δs_2) après expiration d'un premier temps de retard de régulation et, lors d'un dépassement de la deuxième plage de tolérance de niveau théorique (Δs_2) par le niveau réel (s_ist), pour provoquer une rétro-régulation du niveau réel (s_ist) au niveau théorique (s_soll) après expiration d'un deuxième temps de retard de régulation, dans lequel le dispositif de régulation de niveau (9) est conçu de telle sorte que l'intervalle de temps (t_1) du deuxième temps de retard de régulation est inférieur à l'intervalle de temps (t_2) du premier temps de retard de régulation.
